## Europäisches Patentamt

## European Patent Office

## Office européen des brevets

(19)

(11) Veröffentlichungsnummer: **0 324 901**

**A2**

# (12) EUROPÄISCHE PATENTANMELDUNG

(21) Anmeldenummer: **88117764.6**

(22) Anmeldetag: **25.10.88**

(51) Int. Cl.⁴: **B29C 45/17**

(30) Priorität: **29.10.87 DE 3736634**

(43) Veröffentlichungstag der Anmeldung:
**26.07.89 Patentblatt 89/30**

(84) Benannte Vertragsstaaten:
**AT CH DE FR IT LI NL**

(71) Anmelder: **WEFOBA GMBH
Im Bühl 10
D-7160 Gaildorf-Unterrot(DE)**

(72) Erfinder: **Fritzsche,Albrecht
Im Brühl 10
7160 Gaildorf-Unterroth(DE)**

(74) Vertreter: **Schön, Theodor, Patent- und
Zivilingenieur
Sonnleiten 7
D-8311 Moosthenning 1(DE)**

(54) **Zentrier-bzw. Aufspanneinrichtung für ein Spritzgiesswerkzeug.**

(57) Die Erfindung betrifft eine Aufspannvorrichtung
für das zweiteilige Spritzgießwerkzeug an den beiden Tragseiten ( 28,29) einer Spritzgießmaschine,
bei der die Werkzeughälften durch mittels einer
Schraubverbindung (30, 31) an den Tragseiten
(28,29) befestigbaren mit jeweils einer Zentrier-
Aufnahme-Ausnehmung (24, 25) versehene
Zentrierring-Haltekörper (36, 38) und verstellbare
Sperrkörper, die durch in wenigstens einer einseitig
nach außen offenen Ausnehmung der Zentrierring-
Haltekörper (36, 38) und um zur Zentrierring-
Aufnahme-Ausnehmung (24,25) in den Zentrierring-
Haltekörpern (36, 38) parallele Achsen schwenkbar
an den Zentrierring-Haltekörpern (36, 38) gelagerte
und die Umfangsfläche der Zentrierring-Haltekörper
(36,38) überragende, bei eingespanntem Zentrierring
wenigstens annähernd parallel zueinander ausgerichtete Hebel (40,41), gebildet sind.

Figur 1

EP 0 324 901 A2

## Zentriervorrichtung für ein Spritzgießwerkzeug

Die Erfindung betrifft eine Zentriervorrichtung für ein Spritzgießwerkzeug einer Spritzgießvorrichtung mit zwei koaxial angeordneten Zentrierringen, die im wirksamen Zustand der Zentriervorrichtung einerseits in Vertiefungen der den Spritzgießwerkzeug-Tragseiten zugekehrten Stirnseiten und andererseits in Ausnehmungen der einander zugekehrten Spritzgießwerkzeug-Tragseiten eingreifen und mit diesen formschlüssig verbindbar sind.

Es ist bekannt, daß Kunststoffartikel in Spritzgießmaschinen hergestellt werden können. Das Spritzgießen ist ein Druckkraftgießen, bei dem ein Kolben oder Schneckenkolben die in einem Zylinder plastizierte Werkstoffmischung unter hohem Druck durch eine Düse in ein geschlossenes, auf Vulkanisationstemperatur erwärmtes Spritzgießwerkzeug einspritzt. Die Werkzeugfüllung erfolgt beim Spritzgießen durch ein außerhalb des Werkzeuges befindliche Plastiziereinheit. Bei Mehrfachwerkzeugen gelangt die Werkstoffmischung durch einen zentralen Angußkanal in die Werkzeughöhlungen. Großvolumige oder dickwandige Formartikel werden durch Fließgießen, eine Kombination von Extrudieren und Spritzgießen (auch Intrusionsspritzgießen genannt), gefertigt. Die Beschickung von Spritzgießautomaten geschieht gewöhnlich durch Einlauf eines Mischungsbandes in den Einflußschacht der Spritzgießmaschine. Ferner ist bekannt, daß jeder Artikel durch ein ganz spezielles Spritzgießwerkzeug herstellbar ist. Daher ist es erforderlich, daß eine Spritzgießvorrichtung mit mehreren Spritzgießwerkzeugen bestückbar ist. Das Spritzgießwerkzeug ist hierbei mit den Spritzgießwerkzeug- Tragseiten z.B. mittels Schrauben verbindbar, die sich in Richtung der Hin- oder Herbewegungen des Spritzgießwerkzeuges erstrecken. Die Schrauben sind daher regelmäßig in solchen Bereichen der Spritzgießvorrichtung angeordnet, die schwer zugänglich sind. Dies hat zur Folge, daß die Standzeiten einer Spritzgießvorrichtung, die mit der Auswechselung eines Spritzgießwerkzeuges verbunden sind, hoch sind.

Ausgehend von dem obigen Stand der Technik liegt der Erfindung die Aufgabe zugrunde, eine Zentriervorrichtung der eingangs genannten Art ohne unangemessenen konstruktiven Aufwand so weiterzubilden, daß die Umrüstzeit deutlich herabgesetzt wird.

Weiterhin liegt der Erfindung die Aufgabe zugrunde eine von Hand betätigbare Aufspanneinrichtung zur Verwendung in Verbindung mit einem beliebigen Spritzgießwerkzeug und/oder einer beliebigen Spritzgießmaschine zu schaffen, die sich durch eine besondere bauliche Einfachheit auszeichnet und neben einer Verringerung der Aufspannzeit insbesondere auf maschinenseitige Vorrichtungen, wie Druckmittelanschlüsse und dergl. verzichtet und daher bezüglich Maschine und Werkzeug ohne besonderen Aufwand jederzeit nachrüstbar ist und die ferner auch ein Verdrehen des Spritzwerkzeuges um bis zu 360° erlaubt.

Die gestellte Aufgabe wird erfindungsgemäß dadurch gelöst, daß die Zentrierringe mit dem Spritzgießwerkzeug z.B. mittels Schrauben fest verbindbar sind, daß in dem aus dem Spritzgießwerkzeug herausragenden zylindrischen Abschnitt des jeweiligen Zentrierringes eine koaxiale, nach außen hin offene Ringnut ausgebildet ist und daß die Spritzgießwerkzeug-Tragseiten jeweils einen Zentrierring-Haltekörper, in dem die Ausnehmung ausgebildet ist, mit mindestens einem Sperrkörper besitzen, der im wirksamen Zustand des Zentrierring-Haltekörpers in die Ringnut eingreift und den Zentrierring im Zentrierring-Haltekörper fixiert.

Man erkennt, daß die Erfindung jedenfalls immer dann verwirklicht ist, wenn die Fixierung der Zentrierringe in den Zentrierring-Haltekörpern mittels Sperrkörpern erfolgt, die so angeordnet sind, daß sie für den Benutzer ohne weiteres zugänglich sind. Zentrieren des Spritzgießwerkzeuges innerhalb der Spritzgießvorrichtung erfolgt in diesem Falle sehr einfach, da das Einfahren der zylindrischen Abschnitte der Zentrierringe, die aus dem Spritzgießwerkzeug herausragen, in die Zentrierring-Haltekörper eine Angelegenheit von wenigen Sekunden ist. Danach werden die Spritzgießwerkzeug-Tragseiten bis zum Anschlag bewegt, und zwar gegeneinander, was ebenfalls nur wenige Sekunden in Anspruch nimmt. Schließlich werden die Sperrkörper in die Ringnuten versetzt. Hierbei können Schrauben, Keile, Bolzen sowie Hebel in Betracht kommen. Soll nun das Spritzgießwerkzeug ausgewechselt werden, dann werden die Sperrkörper aus den Nuten ausgefahren, die Spritzgießwerkzeug-Tragseiten voneinander gefahren und schließlich das Spritzgießwerkzeug aus der Spritzgießvorrichtung entfernt.

Weitere zweckmäßige und vorteilhafte Ausgestaltungen der Erfindung gehen aus den Unteransprüchen hervor.

Eine besonders zweckmäßige Maßnahme der Erfindung sieht vor, daß der Zentrierring-Haltekörper mit der Spritzgießwerkzeug-Tragseite mittels Schrauben verbindbar ist. Der besondere Vorteil dieser Maßnahme besteht darin, daß mit solchen Zentrierring-Haltekörpern an sich herkömmliche Spritzgießvorrichtungen bestückt werden können. Der Umbau einer handelsüblichen Spritzgießvorrichtung in eine erfindungsgemäße Spritzgießvorrichtung beschränkt sich daher nur auf die Anbringung der beiden Zentrierring-Haltekörper. Im Rahmen dieses Erfindungsgedankens sieht eine besonders zweckmäßige Maßnahme der Erfindung vor, daß der im wesentlichen plattenförmige Zentrierring-Haltekörper zwei ein- oder zweiarmige Hebel besitzt, die quer zur Zentralachse der Zentrierringe verschwenkbar sind und die im wirksamen Zustand des Zentrierring-Haltekörpers in die Ringnut eingreifen. Dabei können die Hebel in Ausnehmungen des Zentrierring-Haltekörpers gelagert sein, die zur Spritzgießwerkzeug-Tragseite hin offen sind. Diese Ausführungsform der Ausnehmungen sind schon deswegen von besonderem Vorteil, weil sie einfach herstellbar sind.

Eine weitere zweckmäßige Ausgestaltung der Erfindung sieht vor, daß die Ausnehmungen in axialer Draufsicht auf den Zentrierring- Haltekörper etwa trapezförmig sind, wobei die beiden Grundlinien so bemessen sind, daß der jeweilige Hebel von der wirksamen in die unwirksame Arbeitsstellung und zurück verschwenkbar ist. Der besondere Vorteil von Sperrkörpern in Form von Hebeln besteht darin, daß die Fixierung der Zentrierringe mit einer Handbewegung erfolgen kann. Die Hebel ragen hierbei aus dem Zentrierring-Haltekörper hinaus und erstrecken sich rechtwinklig zur Zentralachse der Zentrierringe. Ein mühsames Suchen nach Verbindungsschrauben, durch die, wie beim Stand der Technik, eine Verbindung zwischen dem Spritzgießwerkzeug und der Spritzgießwerkzeug-Tragseite herstellbar ist, entfällt daher gänzlich.

Es hat sich gezeigt, daß zwischen einem solchen Hebel, der gewöhnlich aus Metall besteht, und der Ringnut eine Reibverbindung herstellbar ist, die sich von selbst nicht löst. Sollte die Spritzgießvorrichtung während des Spritzgießverfahrens erheblichen Vibrationen ausgesetzt sein, dann kann es sinnvoll sein, den Hebel mit einer Sperreinrichtung zu versehen, die eine ortsfeste Verbindung des Hebels mit Bezug auf den Zentrierring sicherstellt. Dies kann z.B. mittels eines Bügels erreicht werden, der zwei Hebel miteinander verbindet.

Eine weitere zweckmäßige Ausgestaltung der Erfindung sieht vor, daß der in die Ringnut eingreifende Abschnitt des Hebels sich in Richtung der Zentralachse des Zentrierringes verjüngt. Bei einem plattenförmigen und im Querschnitt etwa rechteckigen Hebel ist es zweckmäßig, wenn der Abschnitt angefast ist. Hierbei ist es besonders vorteilhaft, wenn der angefaste Abschnitt eine Ebene definiert, die die Zentralachse der Zentrierringe unter einem Winkel von 80° - 90°, vorzugsweise 86°, schneidet. Dadurch wird auf den Zentrierring eine Hebelwirkung ausgeübt, deren Resultierende in Richtung der Zentralachse der Zentrierringe verläuft. Je kleiner die Anfasung, d.h. je größer der Winkel, umso größer ist die vom Hebel aus herrührende und auf den Zentrierring ausgeübte Kraft; hierbei ist jedoch die in axialer Richtung erfolgte Verstellbewegung des Zentrierringes sehr gering. Ist der Winkel verhältnismäßig klein, dann ist die Kraft geringer, die Verstellstrecke des Zentrierringes ist jedoch größer.

Bezüglich einer schnellen Einführung der Zentrierringe in die Zentrierring-Haltekörper ist es zweckmäßig, wenn die Umhüllung der in die Ausnehmung eingreifenden Partie des Zentrierringes die Form eines Kegelstumpfes besitzt.

Ein Ausführungsbeispiel der Erfindung ist in der Zeichnung schematisch dargestellt und wird im folgenden näher erläutert. Es zeigen

Fig. 1 eine Seitenansicht einer Spritzgießvorrichtung im Teilschnitt,

Fig. 2 einen Zentrierring-Haltekörper in Stirnansicht,

Fig. 3 einen Schnitt durch den in Fig. 2 dargestellten Zentrierring-Haltekörper entlang der Linie III-III, Fig. 4 einen Schnitt entlang der Linie IV-IV nach Fig. 2,

Fig. 5 einen Zentrierring in axialer Draufsicht und

Fig. 6 eine Seitenansicht und Teilschnitt des in Fig. 5 dargestellten Zentrierringes.

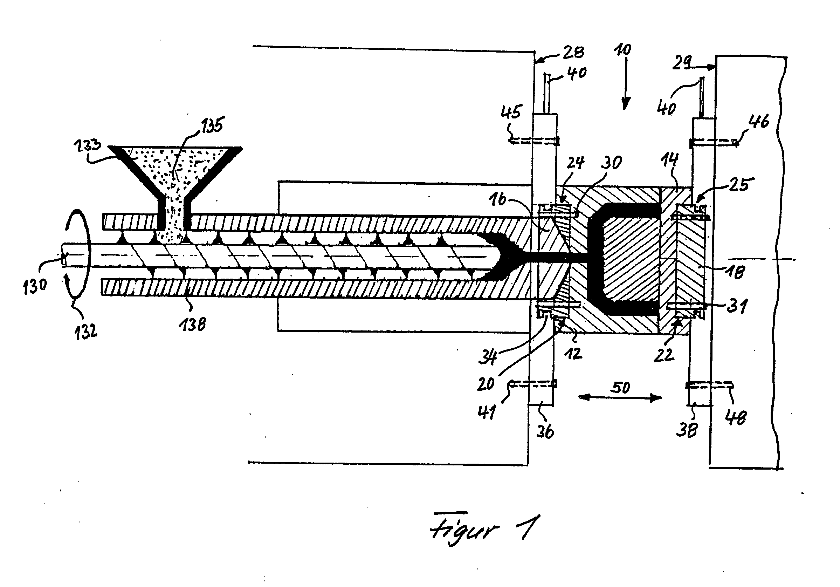

In Fig. 1 ist eine Spritzgießvorrichtung mit einem Spritzgießwerkzeug 10, die aus den Teilen 12 und 14 besteht, dargestellt. Die Spritzgießvorrichtung besitzt zwei Zentrierringe 16 und 18, die koaxial angeordnet sind. Die Zentrierringe greifen in Vertiefungen 20 und 22 des Spritzgießwerkzeuges sowie in Ausnehmungen 24 und 25 der einander zugekehrten Spritzgießwerkzeug-Tragseiten 28 und 29 ein und sind mit diesen formschlüssig verbindbar. Die Zentrierringe 16 und 18 sind mit dem Spritzgießwerkzeug 10 mittels Schrauben 30 und 31 fest verbindbar. In dem aus dem Spritzgießwerkzeug 10 herausragenden zylinderischen Abschnitt 32 des Zentrierringes 16 (vgl. Fig. 6) ist eine koaxiale, nach außen hin offene Ringnut 34 ausgebildet. Die Spritzgießwerkzeug-Tragseiten 28 und 29 tragen jeweils einen Zentrierring-Haltekörper 36 und 38, in dem die Ausnehmungen 24 und 25 ausgebildet sind. Jeder Zentrierring-Haltekörper 36 und 38 besitzt zwei in Form von Hebel ausgebildete Sperrkörper 40 und 41, die im wirksamen Zustand des Zentrierring-Haltekörpers 36 bzw. 38 in die Ringnut 34 eingreifen und den Zentrierring 16 im Zentrierring-Haltekörper 36 bzw. 38 fixieren. Die Zentrierring-Haltekörper 36 und 38 sind mit den zugeordneten Spritzgießwerkzeug-Tragseiten 28 und 29 mittels Schrauben 45 - 48 lösbar verbindbar.

Während des Spritzgießverfahrens bilden die Spritzgießwerkzeug-Tragseiten hin- und hergehende, lineare Bewegungen aus, und zwar in Richtung des Doppelpfeiles 50.

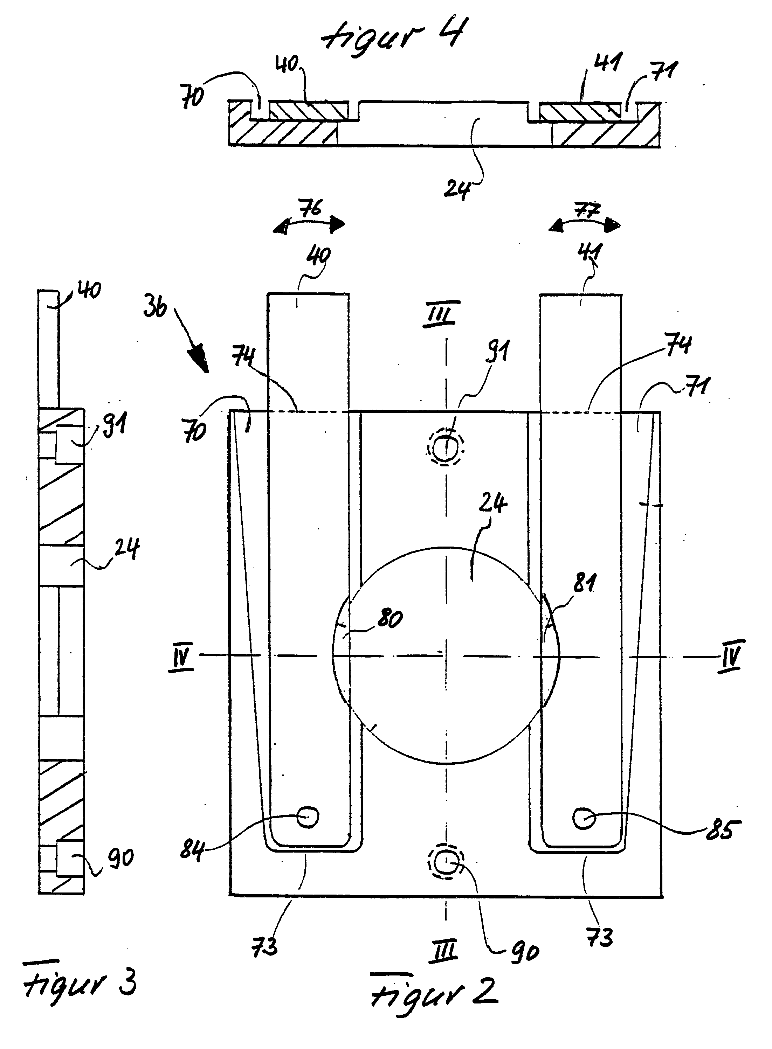

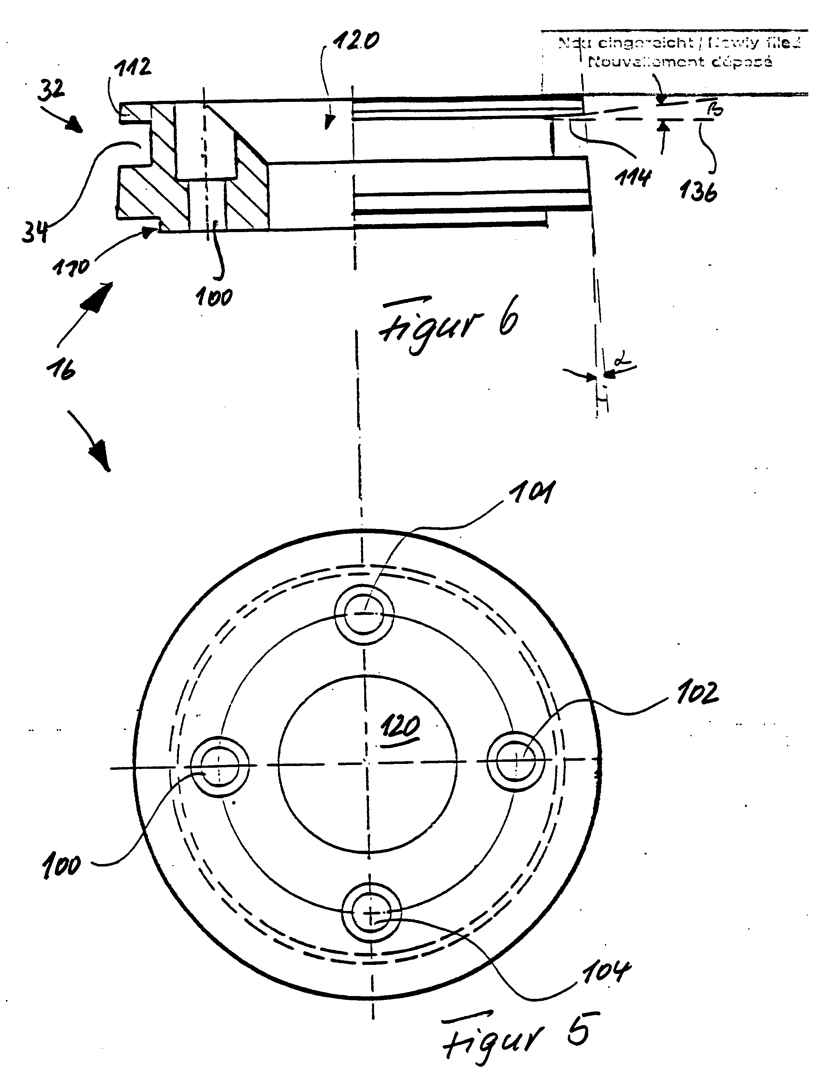

Fig. 2,3 und 4 lassen erkennen, daß der im wesentlichen plattenförmige Zentrierring-Haltekörper 36 zwei einarmige Hebel 40 und 41 besitzt, die quer zur Zentralachse der Zentrierringe 16,18 verschwenkbar sind und die im wirksamen Zustand des Zentrierring-Haltekörpers 36 in die Ringnut 34 (vgl. Fig. 6) eingreifen. Die Hebel 40 und 41 sind in Ausnehmungen 70 und 71 des Zentrierring-Haltekörpers 36 gelagert, die zur Spritzgießwerkzeug-Tragseite hin offen sind. Die Ausnehmungen 70 und 71 sind in axialer Draufsicht auf den Zentrierring-Haltekörper 36 etwa trapezförmig, wobei die beiden Grundlinien 73 und 74 so bemessen sind, daß der jeweilige Hebel 40 und 41 von der wirksamen in die unwirksame Arbeitsstellung und zurück verschwenkbar ist, was durch die Doppelpfeile 76 und 77 dargestellt ist. Die in die Ringnut 34 eingreifenden Abschnitte 80 und 81 der Hebel 40 und 41 verlängern sich in Richtung der Zentralachse der Zentrierringe. Die im wesentlichen plattenförmigen und im Querschnitt etwa rechteckigen Hebel 40 und 41 sind im Bereich der Abschnitte 80 und 81 angefast. Die Abschnitte 80 und 81 definieren jeweils eine Ebene, die die Zentralachse der Zentrierringe in einem Winkel von $86\,^\circ$ schneiden. Die Hebel 40 und 41 sind mittels Bolzen 84 und 85 am Zentrierring-Haltekörper 36 angelenkt. Man erkennt, daß die Hebel 40 und 41 im wirksamen Zustand (vgl. Fig. 2) etwa parallel verlaufen. Ihre Abschnitte 80 und 81 greifen in die Zentralausnehmung 24 ein, die für die Aufnahme des Abschnittes 32 des Zentrierringes 16 vorgesehen ist. Ferner besitzt der Zentrierring-Haltekörper 36 zwei Bohrungen 90 und 91 für die Schrauben 45 und 47. Es handelt sich hier um nach innen abgesetzte Bohrungen, in die die Köpfe der Schrauben 45 und 47 versenkt anbringbar sind.

Fig. 5 und 6 lassen erkennen, daß der Zentrierring 16 vier stufenförmig abgesetzte Bohrungen 100 bis 104 für die Schrauben 30 und 31 besitzt, durch die eine feste Verbindung mit dem Spritzgießwerkzeug 10 herstellbar ist. In axialer Richtung und zum Spritzgießwerkzeug 10 hin ist der Zentrierring stufenförmig abgesetzt, wobei der Stufen 110 in die Vertiefung 20 des Spritzgießwerkzeuges 10 formschlüssig angeordnet ist. Der eine Schenkel 112, der die Ringnut 34 begrenzt, ist angefast, wobei die durch die angefaste Seite 114 definierte Ebene mit einer Geraden 116, die rechtwinklig zur Längsmittelachse des Zentrierringes 16 verläuft, einen Winkel $\beta$ definiert. Die Außenumhüllung des Zentrierringes 16 ist kegelstumpfförmig, wobei der Mantel der Außenumhüllung die Längsmittelachse des Zentrierringes 16 unter einem Winkel $\alpha$ schneidet. Der Zentrierring 16 besitzt eine mittige Bohrung 120, die sich in Richtung Spritzgießwerkzeug 10 verjüngt und für die Zufuhr der plastizierten Kunststoffmischung vorgesehen ist.

Man erkennt, daß die in Fig. 1 dargestellte Spritzgießmaschine eine Schneckenspritzgießmaschine ist, die durch gleichmäßige Plastifizierung und Temperaturverteilung aufgrund der Bewegung der Schnecke 130 in Richtung des Pfeiles 132, die, als Kolben wirkend, das Werkzeug füllt. Dabei wird das Material über einen Trichter 133 in einen Einzugsschacht 138 dem Schneckenkolben 130 zugeführt. Der Schneckenkolben ist in einem Plastizierzylinder 138 gelagert und bewegt den Werkstoff in Richtung des Spritzgießwerkzeuges 10. Ist das Werkstück hergestellt, dann bewegen sich die beiden Spritzgießwerkzeug-Tragseiten 28 und 29 linear voneinander, so daß das fertige Werkstück aus dem Spritzgießwerkzeug 10 herausfallen kann. Danach nimmt das Spritzgießwerkzeug 10 die in Fig. 1 dargestellte Position ein.

Die durch Erfindung erzielten Vorteile bestehen insbesondere in der extrem kurzen Umrüstezeit des Spritzgießwerkzeuges und auch darin, daß das Spritzgießwerkzeug 10 um die Zentralachse, die durch die beiden Zentrierringe 16 und 18 definiert ist, um $360\,^\circ$ verdrehbar ist, so daß auch die Auswurfstelle der fertigen Werkstücke verändert werden kann.

Vorteilhaft an der erfindungsgemäßen Aufspanneinrichtung ist weiterhin, daß sie unabhängig von deren jeweiliger Ausstattung, erforderlichenfalls sowohl in Verbindung mit jeder Spritzgießmaschine als auch in Verbindung mit jedem Spritzwerkzeug, mit dem Vorteil einer Verringerung der Rüstzeit angewendet werden kann und daß ferner die Schraubverbindung der Zentrierring-Haltekörper mit dem Tragseiten einerseits und die Schraubverbindung der Zentrierring mit dem Werkzeughälften andererseits eine gewisse Vorzentrierung ergibt, die ein problemloses Verwenden und Aufspannen von Werkzeugen mit oder ohne Zentrierring ermöglicht.

Ein besonderer Vorteil der erfindungsgemäßen Aufspanneinrichtung ist ferner darin zu sehen, daß diese manuell betätigbar und in der Wirkstellung mit einfachsten Mitteln arretierbar ist. Auch wirkt es sich im praktischen Betrieb vorteilhaft aus, daß die erfindungsgemäße Aufspanneinrichtung aus wenigen, denkbar einfachen Bauteilen besteht und bei einmaligem Anschluß entweder an die Spritzgießmaschine und /oder an das Werkzeug bleibend verwendbar ist, wobei auch eine halbseitige Nachrüstung, entweder am Werkzeug oder an der Maschine erfolgen kann, derart, daß beispielsweise an einer nachgerüsteten Maschine auch bereits mit einem einteilig angeformten Zentrierring versehene Werkzeuge aufgespannt werden können.

## Ansprüche

1. Zentriervorrichtung für ein Spritzgießwerkzeug einer Spritzgießvorrichtung mit zwei koaxial angeordneten Zentrierringen, die im wirksamen Zustand der Zentriervorrichtung einerseits in Vertiefungen der den Spritzgießwerkzeug-Tragseiten zugekehrten Stirnseiten und andererseits in Ausnehmungen der einander zugekehrten Spritzgießwerkzeug-Tragseiten eingreifen und mit diesen formschlüssig verbindbar sind,
dadurch gekennzeichnet,
daß die Zentrierringe (16,18) mit dem Spritzgießwerkzeug (10) z.B. mittels Schrauben (30,31) fest verbindbar sind, daß in dem aus dem Spritzgießwerkzeug (10) herausragenden zylindrischen Abschnitt (32) des jeweiligen Zentrierringes (16) eine koaxikale, nach außen hin offene Ringnut (34) ausgebildet ist und
daß die Spritzgießwerkzeug-Tragseiten (28,29) jeweils einen Zentrierring-Haltekörper (36,38), in dem die Ausnehmung (24,25) ausgebildet ist, mit mindestens einem Sperrkörper besitzen, der im wirksamen Zustand des Zentrierring-Haltekörpers (36,58) in die Ringnut (34) eingreift und den Zentrierring (16) im Zentrierring-Haltekörper (36,38) fixiert.

2. Zentriervorrichtung nach Anspruch 1,
dadurch gekennzeichnet,
daß der Zentrierring-Haltekörper (36,38) mit der Spritzgießwerkzeug-Tragseite (28,29) mittels Schrauben (45-48) verbindbar ist.

3. Zentriervorrichtung nach Anspruch 1 oder 2,
dadurch gekennzeichnet,
daß der im wesentlichen plattenförmige Zentrierring-Haltekörper (36) zwei ein- oder zweiarmige Hebel (40,41) besitzt, die quer zur Zentralachse der Zentrierringe (16,18) verschwenkbar sind und die im wirksamen Zustand des Zentrierring-Haltekörpers (36) in die Ringnut eingreifen.

4. Zentriervorrichtung nach einem der Ansprüche 1 bis 3,
dadurch gekennzeichnet,
daß die Hebel (40,41) in Ausnehmungen (70,71) des Zentrierring-Haltekörpers (36) gelagert sind, die zur Spritzgießwerkzeug-Tragseite hin offen sind.

5. Zentriervorrichtung nach einem der Ansprüche 1 bis 4,
dadurch gekennzeichnet,
daß die Ausnehmungen (70,71) in axialer Draufsicht auf den Zentrierring-Haltekörper (36) etwa trapezförmig sind, wobei die beiden Grundlinien (73,74) so bemessen sind, daß der jeweilige Hebel (40,41) von der wirksamen in die unwirksame Arbeitsstellung und zurück verschwenkbar ist.

6. Zentriervorrichtung nach einem der Ansprüche 1 bis 5,
dadurch gekennzeichnet,

daß der in die Ringnut (34) eingreifende Abschnitt (80,81) des Hebels (40,41) sich in Richtung der Zentralachse des Zentierringes verjüngt.

7. Zentriervorrichtung nach Anspruch 6 mit einem plattenförmigen und im Querschnitt etwa rechteckigen Hebel,
dadurch gekennzeichnet,
daß der Abschnitt (80,81) angefast ist.

8. Zentriervorrichtung nach einem der Ansprüche 7,
dadurch gekennzeichnet,
daß der angefaste Abschnitt (80,81) eine Ebene definiert, die die Zentralachse der Zentrierringe (16) unter einem Winkel von $80°$-$89°$, vorzugsweise $86°$, schneidet.

9. Zentriervorrichtung nach einem der Ansprüche 1 bis 8,
dadurch gekennzeichnet,
daß die Umhüllung der in die Ausnehmung eingreifenden Partie des Zentrierringes die Form eines Kegelstumpfes besitzt.

10. Aufspannvorrichtung für das Spritzgießwerkzeug einer Spitzgießmaschine, bestehend aus je einem mit je einer der Hälften des Spritzgießwerkzeuges verbundenen, zylindrischen Zentierring und je einer an jeder der Tragseiten der Spritzgießmaschine angeordneten den jeweiligen Zentrierring aufnehmenden zylindrischen Ausnehmung, wobei die Zentrierringe jeweils mit einer im Abstand zu ihrer freien Stirnseite angeordneten Umfangsnut versehen sind, in die radial zur Achse der Zentrierringe verstellbare Sperrkörper eingreifen, dadurch gekennzeichnet, daß in Verbindung mit mittels einer Schraubverbindung an den Tragseiten (28,29) befestigbaren, mit jeweils einer Zentrierring-Aufnahme-Ausnehmung versehenen Zentrierring-Haltekörpern (36, 38) die Sperrkörper durch in wenigstens einer einseitig nach außen offenen Ausnehmung der Zentrierring-Haltekörper und um zur Zentrierring-Aufnahme-Ausnehmung (24, 25) in den Zentrierring-Haltekörpern (36, 38) parallele Achsen schwenkbar an den Zentrierring- Haltekörpern gelagerte und die Umfangsfläche der Zentrierring-Haltekörper überragende Hebel (40, 41) gebildet sind.

11. Aufspannvorrichtung nach Anspruch 10, dadurch gekennzeichnet, daß einerseits die Zentrierring-Haltekörper (36, 38) mit den Tragseiten (28, 29) und andererseits die Zentrierringe (16) mit dem Sptizgießwerkzeug jeweils in vorgegebener aus Richtung einerseits zum Werkzeug und andererseits zu den Tragseiten (28, 29) der Spritzgießmachschine durch Schraubenbolzen Verbindbar sind.

12. Aufspanneinrichtung nach Anspruch 10 und 11, dadurch gekennzeichnet, daß die Hebel (40, 41) durch Flachmaterialzuschnitte mit rechteckigem Profilquerschnitt gebildet und in unsymetrisch V-förmigen Ausnehmungen (70,71) der Zentrierring-Haltekörper derart angeordnet sind, daß sie bei eingespanntem Zentrierring wenigstens annäherd parallel zueinander ausgerichtet sind, angeordnet sind.

13. Aufspanneinrichtung nach Anspruch 10 bis 12, dadurch gekennzeichnet, daß die Hebel (40, 41) in ihrer wirksamen Spannlage mittels einer Koppel, z.B. einem Bügel, festlegbar sind und daß die Hebel (40, 41) jeweils über einen Längenabschnitt hin mit einer Schrägfläche versehen sind, deren Ebene die Achse der Zentrierringe unter einem Winkel zwischen 80° und 90° schneidet.

14. Aufspanneinrichtung nach Anspruch 10 bis 13, dadurch gekennzeichnet, daß das Sptizgießwerkzeug (10) zur Veränderung der Lage der Auswurfstelle für die Spritzgußteile um 360° um die zueinander fluchtenden Achsen der beiden Zentrierringe (16, 18) drehbar ist.

Figur 1

EP 0 324 901 A2

figur 4

Figur 3

Figur 2

Neu eingereicht / Newly filed
Nouvellement déposé

Figur 6

Figur 5